# EUROPEAN PATENT APPLICATION

(11) **EP 3 766 804 A1**
(43) Date of publication of application: **20.01.2021**
(21) Application number: 19187204.3
(22) Date of filing: 19.07.2019
(51) Int. Cl.: B65D 90/64, F16K 27/06, F16K 27/07, F16K 31/52, F16K 31/60

(54) **DISCHARGE DEVICE FOR CONTAINER**

(71) Applicant: Thielmann AG, 6300 Zug (CH)
(72) Inventor: LANDSCHÜTZ, Peter, 77756 Hausach (DE)
(74) Representative: Clarke Modet & Co.

(57) **Abstract**

Discharge device for container, comprising a first ball valve (3) connectable to the bottom surface of a container (1) and actuated by a first handle (4), and a second ball valve (6) actuated by a second handle (7), and connected to the first ball valve (3) by means of a connecting pipe (5).

## Description

### Field of the invention

The present invention is encompassed within the technical field of tanks and containers, specifically intermediate bulk containers (IBCs), and more specifically to intermediate bulk containers intended for transporting and storing dangerous goods, which require special attention and care to guarantee safe transport, storage and discharge.

This invention relates in particular to a discharge device for container, which combines safety and economic advantages by means of a double ball valve connectable at the bottom surface of the container.

### Background

Different tanks and containers having different discharge systems are known from the prior art for different uses. A great number of containers have been developed for transporting, storing and discharging dangerous goods, which require special attention and care to guarantee safe transport, storage and discharge.

Specifically intermediate bulk containers (IBCs) and tank containers are considered a solution available, validated and approved for transport and storage in bulk of most of these dangerous substances.

This kind of containers can be manufactured in plastic, composites or metal, being the first two options those more economically feasible in the short term. This reason has led some stakeholders to choose plastic and composite containers for transporting certain dangerous goods despite there may be limitations regarding the maximum concentration allowed to be transported in these containers due to the lower safety degree provided by such materials.

Alternatively, the containers for such dangerous goods can be made of metal, which provides a much higher safety degree, but as a counterpart it implies a much higher cost, which added to the complexity and high costs of the discharge valves required for this kind of containers, lead to a very expensive and inefficient container.

It is therefore desirable a discharge device for this kind of metal containers, which provide a high safety discharge degree with a reduced cost, allowing the reduction of costs of the whole container, avoiding the drawbacks of the prior art containers.

### Description of the invention

The present invention provides a discharge device for container, the container being of the kind intended for transporting, storing and discharging dangerous goods. Although the discharge device is intended mainly for intermediate bulk containers (IBCs) and tank containers, it could also be used for any kind of container for dangerous goods.

The discharge device for container of the present invention comprises a first ball valve which is connectable to the bottom surface of a container and actuated by a first handle, and a second ball valve actuated by a second handle, and connected to the first ball valve by means of a connecting pipe.

Both ball valves can be manually opened and closed by means of their corresponding handles.

This discharge device having a double valve provides an increase in the safety of the discharge in the field of dangerous goods, where economic feasibility must never compromise the safety associated to the product to be transported, stored and used. Further, this invention provides an economic advantage, due to the low cost of the ball valves, which leads to a low overall cost for the container including the discharge device.

Preferably the first ball valve connects to the lowest point of the bottoms surface of the container, although it could be connected to any other point of the bottom surface.

According to a preferred embodiment of the invention, the second ball valve is horizontally aligned with the first ball valve.

With accord to different embodiments of the invention, the connecting pipe of the discharge device has a length such that when said discharge device is connected to the container the second ball valve is placed within the external perimeter of said container, providing in this way both valves at a comfortable distance from the user and further both valves being covered and protected by the container itself. So, according to these embodiments, both valves will be accessible for the user but protected against damage or accidental opening.

Referring to the above embodiment, the length of the connecting pipe will preferably, be such that when the discharge device is connected to the container the second ball valve is placed at the external perimeter of said container or in proximity of this one. So, the user will have an easier access to the second ball valve.

According to different embodiments of the invention, the first handle will be connected to the first ball valve by means of a connecting rod, which has a length such that both first handle and second handle are at the same distance from the first ball valve, that is, they will be at the same distance of the external perimeter of the container when the discharge device is connected to the container.

Preferably the connecting rod will have a length such than when the discharge device is connected to the container both first handle and second handle are placed at the external perimeter of said container. This embodiment will provide a synergistic effect, which will lead to two advantages, consisting first in an increase in safety provided by the double valve, and second an improvement in user ergonomics and comfort, since the user will have an easier access to both handles of the valves, and will not need to duck under the container to actuate the handles, since he will be able to reach them at the external perimeter of the container.

So, the features of the discharge device for container make this invention a feasible and competitive solution to the technical limitations of the current containers.

The features, functions and advantages that have been discussed can be achieved independently in various embodiments or may be combined in yet other embodiments. Further details of which can be seen with reference to the following description and drawings.

### Brief description of the drawings

Next, in order to facilitate the comprehension of this disclosure, in an illustrative rather than limitative manner a series of embodiments with reference to a series of figures shall be made below.

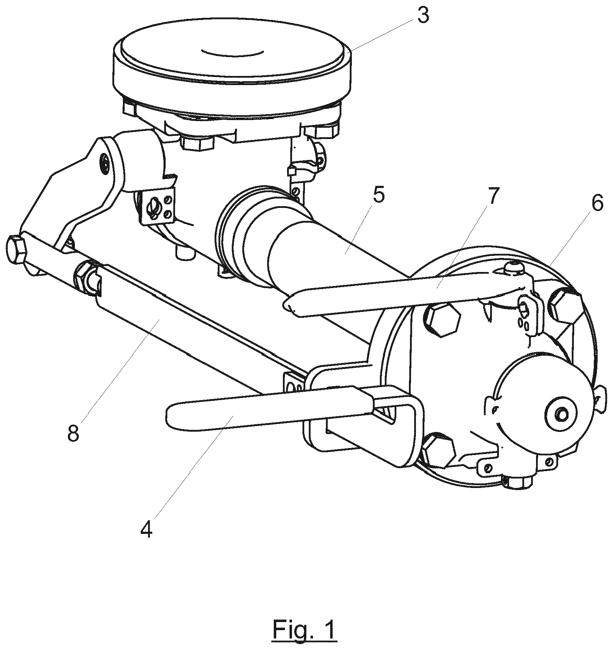

Figure 1 is a perspective view of an embodiment of the discharge device of the present invention, showing the main elements.
Figure 2 shows the discharge device of figure 1 connected to a container.
Figure 3 shows the discharge device of figure 1 connected to a container including a frame for protecting, lifting, stacking and/or rotating the container.

These figures refer to the following set of elements:
1. container
2. frame of the container
3. first ball valve
4. first handle
5. connecting pipe
6. second ball valve
7. second handle
8. connecting rod between first ball valve (3) and first handle (4)

### Detailed description

The present disclosure refers to a discharge device for container, the container being of the kind intended for transporting, storing and discharging dangerous goods.

As it can be seen in the figures, the discharge device for container has a first ball valve 3 connectable to the bottom surface of the container 1, which is actuated by a first handle 4, and a second ball valve 6 actuated by a second handle 7, which is connected to the first ball valve 3 by means of a connecting pipe 5.

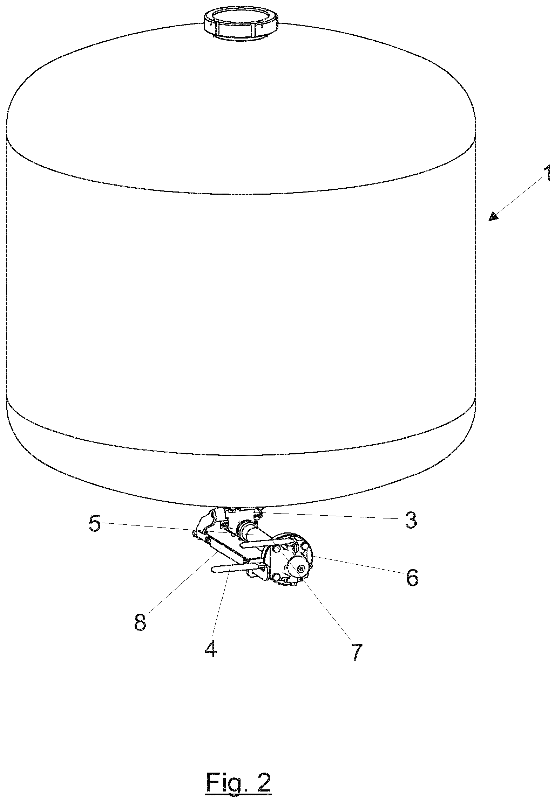

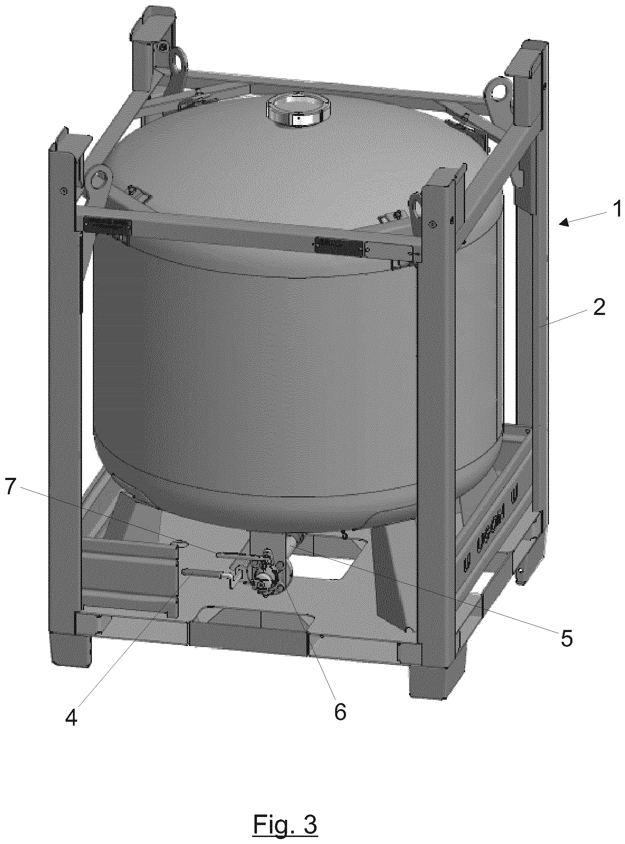

Although the first ball valve 3 can be connected to any point of the bottom surface of the container 1, it connects preferably to the lowest point as shown in figures 2 and 3, in order to ensure the whole content of the container is discharged through the discharge device.

According to a preferred embodiment of the invention, the second ball valve 6 is horizontally aligned with the first ball valve 3.

With accord to different embodiments of the invention, the connecting pipe 5 of the discharge device has a length such that when the discharge device is connected to the container 1, the second ball valve 6 is placed within the external perimeter of the container 1, providing in this way both valves 3,6 below the container 1, within the external perimeter thereof. This provides the advantages of both valves 3,6 being at a comfortable distance from the user, and further both valves 3,6 being covered and protected by the container 1 itself.

With regard to the above embodiment, the length of the connecting pipe 5 will preferably be such that when the discharge device is connected to the container 1 the second ball valve 6 is placed at the external perimeter of the container 1 or in proximity of this one. So, the user will have an easier access to the second ball valve 6.

According to different embodiments of the invention shown in the figures, the first handle 4 is connected to the first ball valve 3 by means of a connecting rod 8, which has a length such that both first handle 4 and second handle 7 are at the same distance from the first ball valve 3, that is, they will be at the same distance of the external perimeter of the container 1 when the discharge device is connected to the container 1.

Preferably the connecting rod 8 will have a length such than when the discharge device is connected to the container 1, both first handle 4 and second handle 7 are placed at the external perimeter of the container 1. This embodiment will provide by means of a synergistic effect, two advantages consisting first in an increase in safety provided by the double valve formed by the first ball valve 3 and the second ball valve 6, and furhter an improvement in user ergonomics and comfort, since the user will have an easier access to both handles 4,7 of the valves 3,6, and will not need to duck under the container 1 to actuate the handles 4,7, since the user will be able to reach them at the external perimeter of the container 1.

According to certain embodiments the container 1 may include a frame 2 for protecting, lifting, stacking and/or rotating it, as shown in figure 3. In these embodiments, as it can be seen in said figure 3 the discharge device will be located between the bottom surface and the frame 2, being protected by them during transport, lifting, stacking and/or rotation of the container 1.

With reference to the above discharge device, in order to open the container 1 and thus discharge the content thereof, the first ball valve 3 is the first to be opened by means of the corresponding first handle 4, located in an accessible part of the bottom area of the container 1. Consequently, once the connecting pipe 5 is full of product, the second ball valve 6 will be opened by using the corresponding second handle 7. The closing sequence is the same, being necessary to close first the first ball valve 3 by the first handle 4 in order to ensure that no product is stored in the connecting pipe 5 before closing the second ball valve 6 by means of the second handle 7.

## Claims

1. Discharge device for container, **characterized in that** it comprises
- a first ball valve (3) connectable to the bottom surface of a container (1) and actuated by a first handle (4), and
- a second ball valve (6) actuated by a second handle (7), and connected to the first ball valve (3) by means of
- a connecting pipe (5).

2. Discharge device for container, according to claim 1, wherein the second ball valve (6) is horizontally aligned with the first ball valve (3).

3. Discharge device for container, according to any of the previous claims, wherein the connecting pipe (5) has a length such that when the discharge device is connected to the container (1) the second ball valve (6) is placed within the external perimeter of said container (1).

4. Discharge device for container, according to the previous claim, wherein the connecting pipe (5) has a length such that when the discharge device is connected to the container (1) the second ball valve (6) is placed at the external perimeter of said container (1).

5. Discharge device for container, according to the previous claim, wherein the first handle (4) is connected to said first ball valve (3) by means of a connecting rod (8) having a length such that both first handle (4) and second handle (4) are at the same distance from the first ball valve (3).

6. Discharge device for container, according to the previous claim, wherein the connecting rod (8) has a length such than when the discharge device is connected to the container (1) both first handle (4) and second handle (4) are placed at the external perimeter of said container (1).
